# EUROPEAN PATENT APPLICATION

(11) **EP 1 098 271 A1**
(43) Date of publication of application: **09.05.2001**
(21) Application number: 00123676.9
(22) Date of filing: 30.10.2000
(51) Int. Cl.: G07F 7/08, G06K 19/07

(54) **Portable phone set installing non touch-type IC**

(30) Priority: 03.11.1999 KR 9923878; 12.11.1999 KR 9924789; 09.02.2000 KR 0006068
(71) Applicant: Kim, Seon-seob, Dangsan-Dong, Yongdeungpo-Gu, Seoul (KR)
(72) Inventor: Kim, Seon-seob, Dangsan-Dong, Yongdeungpo-Gu, Seoul (KR)
(74) Representative: Kern, Ralf M., Dipl.-Ing.

(57) **Abstract**

Disclosed a portable phone set where an Integrated Circuit (IC) of non touch-type is installed or equipped to fill an electronic money for an electronic settlement or a fill of the electronic money. The portable phone set installing an Integrated Circuit (IC) of non touch-type comprises a loop antenna, equipped in a predetermined place of the portable phone set, for communicating with a card reader so that the portable phone set approaches to the card reader; a non touch-type IC of a radio communication manner, connected to the loop antenna, for writing or deleting an amount of filled money according to an amount calculation information provided from the card reader; and an amount filling controller, equipped in equipped within a predetermined place of the portable phone set, for recording an information of a new amount of filled money; wherein, the non touch-type IC renews and records a current amount information by subtracting an used amount from the amount of filled money while communicating to the card reader through the loop antenna; and the amount filling controller downloads a new amount information by communicating with a sever of a financial institution and adds and records an new amount of money of the new amount information as much as a filled amount on the amount of money which is previously filled. Accordingly, there is provided to the advantages that non touch-type card can not be lost and the purpose of the card is completely achieved by installing or equipping the non touch-type IC, which has been using the traffic card or the public telephone card and the like, in the flip or the other place of the portable phone set.

## Description

### BACKGROUND OF THE INVENTION

### 1. Field of the Invention

The present invention relates to a portable phone set installing non touch-type Integrated Circuit (IC), and more particularly to a portable phone set installing a non touch-type Integrated Circuit (IC) which can improve an electronic payment system by installing the non touch-type Integrated Circuit (IC) for filling an electronic money and a loop antenna in the portable phone set. The present invention relates to a portable phone set installing non touch-type Integrated Circuit (IC) for calculating a service fee using the filled amount of money after filling a predetermined amount of money on a portable phone set installing a non touch-type Integrated Circuit (IC) for an advance payment. The present invention also relates to a portable phone set installing non touch-type Integrated Circuit (IC) for calculating a service fee in later using the filled amount of money after filling a predetermined amount of money on a portable phone set installing a non touch-type Integrated Circuit (IC) for a deferred payment.

### 2. Description of the Related Art

A kind of electric cards have been varying in various forms on consideration of establishing the modern information ages, and an electric card using a simple recording medium such as a magnetic tape card have developed to an intellectual IC card. That is, the magnetic cards for public telephone or traffic are divided into a touch-type card of magnetic films, contact terminals and chips, and a non touch-type card of RF manner. Accordingly, communication service fee can be calculated since the non touch-type card, which includes a loop antenna and a non touch-type RF IC on the phone set, communicates with a card reader installed in a bus or public telephone booth.

The non touch-type card is also divided into the advance payment manner and the deferred payment manner. In the advance payment manner, the user have to go a filling station which have a filling device for calculating the used amount and filling a new electronic money in a manner that the used amount is subtracted from the filled amount stored in advance on the non touch-type card and the new amount of money is recorded again on an IC chip of the non touch-type card while the card reader communicates with the non touch-type card. Also, in the deferred payment manner, the service fee is calculated after passing a constant day (i.e., at a settlement day) in a manner that the service fee information and the identifier information of an IC chip of the non touch-type card are promptly or later forwarded to a financial institution sever caused by the user.

However, there are draw backs that the user is inconvenient to carry the non touch-type card separately and have a possibility of losing the card. Also, the user have to directly go the filling station where the filling device for the electronic money is equipped to fill the desired amount on the non touch-type card.

### SUMMARY OF THE INVENTION

An object of the present invention is to solve at least the problems and disadvantages of the related art.

An object of the present invention is to provide a portable phone set installing a non touch-type Integrated Circuit which can meet a requirement of the usage purpose for an electronic card by installing or attaching the non touch-type Integrated Circuit at a flip or the other place of the portable phone set.

Another object of the present invention is to provide a portable phone set installing a non touch-type Integrated Circuit which can solve the drawback in the related art that a user go to a filling station directly for filling an electronic money in a such a manner that the user can remotely fill an amount of money on the non touch-type Integrated Circuit using a radio frequency communication manner.

A further object of the present invention is to provide a portable phone set installing a non touch-type Integrated Circuit for calculating a service fee in convenience using a radio communication manner.

A still further object of the present invention is to provide a portable phone set installing a non touch-type Integrated Circuit which can easily perform a calculation of corresponding service fee used by the non touch-type Integrated Circuit at long distance, so that the portable phone set forwards an identifier information which is recorded in the non touch-type Integrated Circuit.

To achieve the objects and in accordance with the purposes of the invention, as embodied and broadly described herein, a portable phone set installing an Integrated Circuit (IC) of non touch-type, the portable phone set comprises a loop antenna, equipped in a predetermined place of the portable phone set, for communicating with a card reader so that the portable phone set approaches to the card reader; a non touch-type IC of a radio communication manner, connected to the loop antenna, for writing or deleting an amount of filled money according to an amount calculation information provided from the card reader; and an amount filling controller, equipped in equipped within a predetermined place of the portable phone set, for recording an information of a new amount of filled money; wherein, the non touch-type IC renews and records a current amount information by subtracting an used amount from the amount of filled money while communicating to the card reader through the loop antenna; and the amount filling controller downloads a new amount information by communicating with a sever of a financial institution and adds and records an new amount of money of the new amount information as much as a filled amount on the amount of money which is previously filled.

It is desirable that the loop antenna and the non touch-type IC are equipped within a flip of the portable phone set.

To achieve the objects and in accordance with the purposes of the invention, a portable phone set installing an Integrated Circuit (IC) of non touch-type, the portable phone set comprises a loop antenna, equipped in a predetermined place of the portable phone set, for communicating with a card reader so that the portable phone set approaches to the card reader; and a non touch-type IC, connected to the loop antenna, for forwarding an identifier information which is previously given to the card reader according to a request of the card reader; wherein, the card reader detects the identifier information forwarded from the non touch-type IC whiling communicating the non touch-type IC, and transfers an amount information which will be calculated with the detected identifier information to a sever of a financial institution or a recording medium.

It is desirable that the loop antenna and the non touch-type IC are equipped within a flip of the portable phone set.

Also, the portable phone set further comprises an originating switch equipped in a place where a user can operate, the non touch-type IC modulates and outputs the identifier information into Radio Frequency (RF) by driving a driving power source provided from a battery of the portable phone set in accordance with inputting a signal of the originating switch.

The non touch-type IC comprises a RF conversion section for modulating the identifier information into the RF signal; an oscillation section for oscillating a frequency to communicate with the card reader; a memory stored the identifier information; and a controller for driving the oscillation section by inputting the driving power source which is provided from the battery according to sense the signal of the origination switch, detecting the identifier information stored in the memory and synthesizing the detected identifier information on the frequency generated in the oscillation, and modulating the synthesized signal by controlling the RF conversion section and transmitting the modulated signal through the loop antenna.

Further, the portable phone set further comprises an amplification section for amplifying a strength of a forwarding signal with a predetermined level, when the identifier information of the non touch-type IC is forwarded to the card reader by including with the frequency signal generated in the oscillation section.

### BRIEF DESCRIPTION OF THE DRAWINGS

The above objects, features and advantages of the present invention will become more apparent from the following detailed description when taken in conjunction with the accompanying drawings, in which:
Fig. 1 illustrates a portable phone set installing a non touch-type Integrated Circuit (IC) according to the present invention;
Fig. 2 is a system block diagram of a portable phone set installing a non touch-type Integrated Circuit (IC) for advance payment according to a first embodiment of the present invention;
Fig. 3 is a system block diagram of a portable phone set installing a non touch-type Integrated Circuit (IC) for advance payment according to a second embodiment of the present invention; and
Fig. 4 is a detailed block diagram of a non touch-type Integrated Circuit (IC) as the other embodiment of the present invention.

### DETAILED DESCRIPTION OF THE PREFERRED EMBODIMENT

A preferred embodiment of the present invention will now be described with reference to the accompanying drawings. In the following description, same drawing reference numerals are used for the same elements even in different drawings. The matters defined in the description such as a detailed construction and elements of a circuit are nothing but the ones provided to assist in a comprehensive understanding of the invention. Thus, it is apparent that the present invention can be carried out without those defined matters. Also, well-known functions or constructions are not described in detail since they would obscure the invention in unnecessary detail.

### First Embodiment of the Present Invention (Advance Payment Manner)

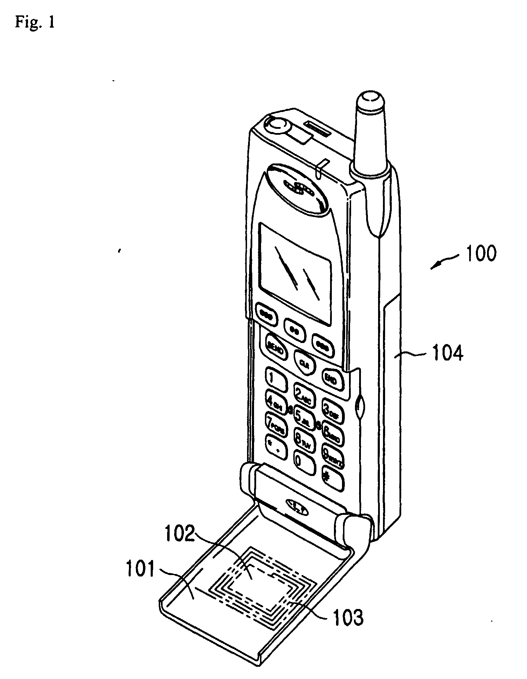

Referring to Fig. 1, a non touch-type Integrated Circuit (IC) 102 and a loop antenna 103 are installed in a flip 101 of a generic portable phone set 100. The non touch-type Integrated Circuit (IC) 102 and a loop antenna 103 can be installed into the flip 101 and molded as a body, and attached or adhered to the flip 101. Also, the non touch-type Integrated Circuit (IC) 102 and a loop antenna 103 can be adhered to a battery 104 which is essentially equipped in the portable phone set 100, and adhered to a printing circuit board in the portable phone set 100.

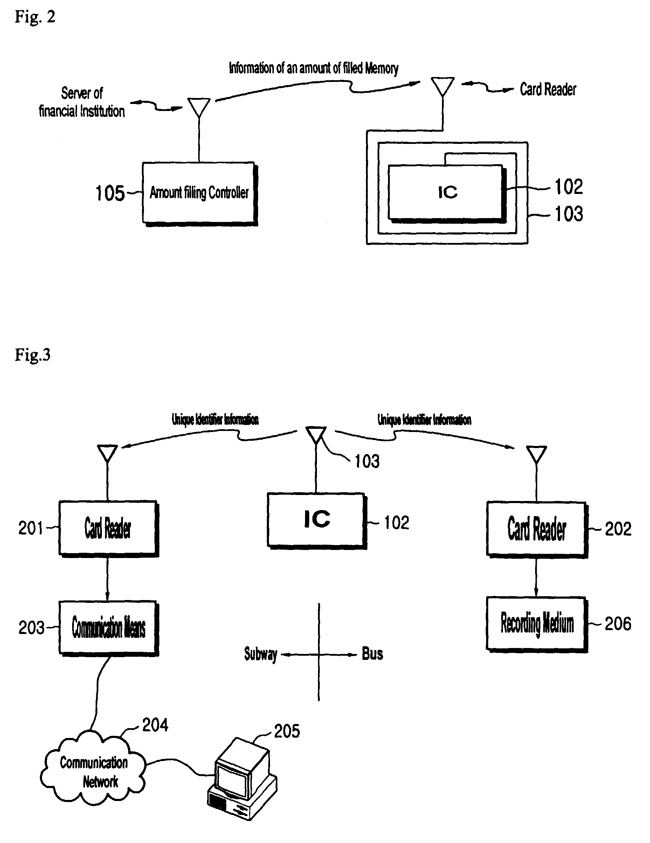

Now, the operation of the first embodiment of the present invention will be described with reference to Fig. 2.

The typical card reader includes the loop antenna 103 for communicating the non touch-type Integrated Circuit (IC) 102 installed in the portable phone set 100, a RF conversion module for converting received data into RF signals to communicate with the non touch-type Integrated Circuit (IC) 102 through the loop antenna 103, a main controller for reading, recording and deleting information previously recorded in the non touch-type Integrated Circuit (IC) 102, an interfacing section for interfacing between the main controller and the RF conversion module.

Thus, if the user approaches the portable phone set, which the non touch-type Integrated Circuit (IC) 102 is installed, to the card reader equipped in a bus or a public telephone booth, and the like, the non touch-type Integrated Circuit (IC) 102 of the portable phone set 100 and the interfacing section of the card reader forwards and receives the necessary information through the loop antenna of the card reader.

At this time, the interfacing section of the card reader detects the identifier information recorded in a corresponding non touch-type Integrated Circuit (IC) 102 and forwards to the main controller. The main controller determines whether the non touch-type Integrated Circuit (IC) 102 is available or not. If the determination result is normal state, the main controller reads the present filled amount of money recorded in the non touch-type Integrated Circuit (IC) 102 and then temporally stores it in a buffer. Next, the main controller deletes the current amount of money recorded in the non touch-type Integrated Circuit (IC) 102 and records the subtracted amount of money in the non touch-type Integrated Circuit (IC) 102 in a such a manner that of subtracting a predetermined amount corresponding to the service fee from the current amount of money recorded in the buffer.

Also, when the user want to fill a new amount of money in the non touch-type Integrated Circuit (IC) 102, the portable phone set receives the information for new filled amount of money from the financial institution server (or a base station) by selecting a predetermined button(s) allocated to fill the electronic money among various function buttons which are adhered on the portable phone set, the amount filling controller 105 generates a signal corresponding to the constant amount of money. Accordingly, the new amount of money can be filled and recorded in the non touch-type Integrated Circuit (IC) 102 in the result that of receiving, at the loop antenna 103 of the flip 101, the information of filling amount of money provided from the potable phone set 100. Here, the settlement method can be selected among various method such as the deferred payment manner applying in credit cards and the advance payment manner withdrawing from the balance designated by the user and filling the corresponding amount of money.

### Second Embodiment of the Present Invention (Deferred Payment Manner)

Referring to Fig. 1 and Fig. 3, a structure of a portable phone set of the second embodiment of the present invention is the same as the first embodiment, when a portable phone set 100 is approached to a card readers 210 and 202, a non touch-type Integrated Circuit (IC) 102 installed in the portable phone set 100 communicates with card readers 201 and 202 through a loop antenna 103. At this time, the card reader 201 can access to a financial institution sever 205 through a communication means 203 and a communication network 204 when the card readers 201 and 202 are equipped in a fixed place such as a subway station and the like, while the card reader 202 have a recording medium 206 separately when the card readers 201 and 202 are equipped in a moving place such as a bus and the like.

The operation of the second embodiment of the present invention will be explained hereinafter.

When the user approaches the portable phone set 100 installing the non touch-type Integrated Circuit (IC) 102 to the card readers 201 and 202 equipped in a bus or subway and the like, the non touch-type Integrated Circuit (IC) 102 of the portable phone set 100 and the interfacing section of the card readers 201 and 202 communicate many kinds of information through the loop antenna 103 of the portable phone set 100 and a loop antenna of the card readers 201 and 202.

At this stage, the interfacing section of the card reader 201 equipped in the fixed place such as the subway station detects an identifier information recorded in the corresponding non touch-type Integrated Circuit (IC) 102 and forwards it to the main controller. And, the main controller determines whether the corresponding non touch-type Integrated Circuit (IC) 102 is available or not. If the determination result is normal state, the card reader 201 temporally store the identifier information allocated to the non touch-type Integrated Circuit (IC) 102 and the current information of electronic money which will be calculated at present, and forwards to the communication means 203 after performing data formation suitable to a standard communication protocol. Next, the communication means 203 forwards the corresponding data (i.e., the identifier information and the current information of electronic money) to the financial institution sever 205 as communicating to the sever 205 through the communication network 204.

Meanwhile, the card reader 202 equipped in the bus have the recording medium to perform the storage function instead of the communication function, since the card reader 202 equipped in a moving place such as the bus has not the communication function. Accordingly, the card reader 202 records in the recording medium 206 the allocated identifier information and the current information of electronic money for calculating at present. Later, the identifier information and the current information of electronic money are reported to a service company or organization (i.e., the financial institution sever 205) by a manager of the card reader in one lump sum. Also, the user can calculate and pay the service fee which is charged by the service company after passing the predetermined time.

### Third Embodiment of the Present Invention

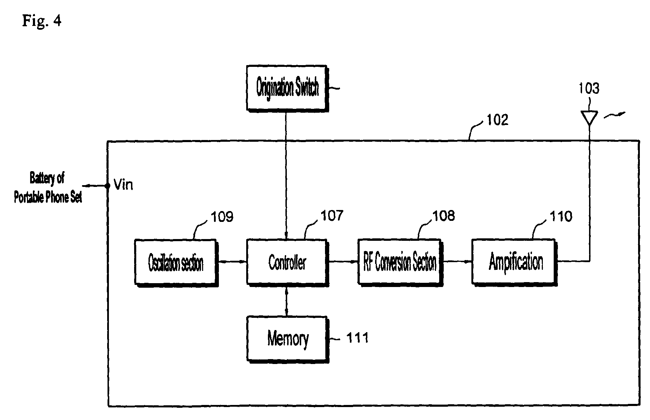

The third embodiment of the present invention relates to a forwarding function of an identifier using a battery power source. As shown in Fig. 4, the non touch-type Integrated Circuit (IC) 102 is driven by a driving power which is provided from the battery of the portable phone set 102 so that the calculation function for the amount of money is performed at a long distance. That is, key pads of the portable phone set 100 has an origination switch 106 for controlling an output state of an unique identifier information by driving each element in the non touch-type Integrated Circuit (IC) 102 according to the user operation.

Meanwhile, the non touch-type IC 102 includes a controller 107 for generally controlling the entire function of the non touch-type Integrated Circuit (IC) 102, a RF conversion section 108 for modulating the identifier information (ID) of the non touch-type Integrated Circuit (IC) 102 into the RF signal, an oscillation section 109 for oscillating a predetermined frequency to communicate between non touch-type Integrated Circuit (IC) 102 and the card readers 201 and 202, a amplification section 110 for amplifying with predetermined level of the identifier information of the non touch-type Integrated Circuit (IC) 102 which is forwarded to the card readers 201 and 202 with the frequency signal generated in the oscillation section 109, a memory 111 stored the identifier information of the non touch-type Integrated Circuit (IC) 102. Also, a power input terminal Vin of the non touch-type Integrated Circuit (IC) 102 is connected to the battery 104 of the portable phone set.

Now, the operation of the non touch-type Integrated Circuit (IC) 102 will be described in detail.

In the non touch-type Integrated Circuit (IC) 102, the radio field intensity is sufficiently guaranteed since the battery 104 of the portable phone set 100 is used as a driving power source, and the communication between the portable phone set 100 and the card readers 201 and 202 is smoothly performed in a long distance (about more 10 cm) which is more longer than general distance (3∼5 cm) for communicating between the portable phone set 100 and the card readers 201 and 202. Also, a space of the loop antenna 103 can be largely reduced than the related art because the radio field intensity is guaranteed. Therefore, the non touch-type Integrated Circuit 102 with multi-function can be installed or it can be positively kept up with the miniature trend of the portable phone.

That is to say, if the user selects the origination switch 106 allocated in the key pad of the portable phone set 100 under the case that the portable phone set 100, which the non touch-type Integrated Circuit is installed, maintains a constant distance from the card readers 201 and 202 equipped in the bus or the subway station and the like, the power voltage outputted from the battery 104 of the portable phone set provides to the input terminal Vin of the non touch-type Integrated Circuit 102, and then the non touch-type Integrated Circuit 102 is driven thereby. Next, the controller 107 of the non touch-type Integrated Circuit 102 controls the oscillation section 109 to generate the predetermined oscillating signal. At this time, the controller 107 detects the identifier information stored in the memory 111 and outputs the information with the oscillation signal to the RF conversion section 108. The RF conversion section 108 modulates the identifier information included in the oscillating signal. Next, the modulated RF signal is amplified with the predetermined level by the amplification section 110 and is transmitted through the loop antenna 103.

Accordingly, the card readers 201 and 202 demodulates the received RF signal into the original information (i.e., the identifier information of the non touch-type Integrated Circuit 102) after receiving the RF signal through the loop antenna.

At this stage, the card reader 201 in the fixed place such as the subway station detects the identifier information recorded in the non touch-type Integrated Circuit 102 and forwards to the main controller as shown in Fig. 3. The main controller determines whether the non touch-type Integrated Circuit 102 is available or not. If the determination result is OK, the card reader 201 temporally store the identifier information allocated to the non touch-type Integrated Circuit (IC) 102 and the current information of electronic money which will be calculated at present, and forwards to the communication means 203 after performing data formation suitable to a standard communication protocol. Next, the communication means 203 forwards the corresponding data (i.e., the identifier information and the current information of electronic money) to the financial institution sever 205 as communicating to the sever 205 through the communication network 204.

Meanwhile, the card reader 202 equipped in the bus have the recording medium to perform the storage function instead of the communication function, since the card reader 202 equipped in a moving place such as the bus has not the communication function. Accordingly, the card reader 202 records in the recording medium 206 the allocated identifier information and the current information of electronic money for calculating at present. Later, the identifier information and the current information of electronic money are reported to a service company or organization (i.e., the financial institution sever 205) by a manager of the card reader in one lump sum. Also, the user can calculate and pay the service fee which is charged by the service company after passing the predetermined time.

As described as above, there is provided the following advantages according to the portable phone set installing the non touch-type Integrated Circuit 102.

First, the non touch-type Integrated Circuit can be prevented from losing from the user and the usage purpose for an electronic card can sufficiently met by installing or attaching the non touch-type Integrated Circuit in the flip or the other place of the portable phone set.

Second, it is convenient in using the non touch-type Integrated Circuit for the advance payment manner, since the amount of money can be filled using the radio communication manner.

Third, the radio field intensity is sufficiently guaranteed since the battery of the portable phone set is used as a driving power source, and the communication between the portable phone set and the card readers is smoothly performed even if the distance is longer than that of the related art. Accordingly, the wrong operation could not occurred and the user could not approach the phone set near to the card reader.

Fourth, a space of the loop antenna can be largely reduced than that of the related art because the radio field intensity is guaranteed. Therefore, the non touch-type Integrated Circuit of multi-function can be installed or it can be positively kept up with the miniature trend of the portable phone

While the invention has been shown and described with reference to certain preferred embodiments thereof, it will be understood by those skilled in the art that various changes in form and details may be made therein without departing from the spirit and scope of the invention as defined by the appended claims.

## Claims

1. A portable phone set installing an Integrated Circuit (IC) of non touch-type, the portable phone set comprising:
a loop antenna, equipped in a predetermined place of the portable phone set, for communicating with a card reader so that the portable phone set approaches to the card reader;
a non touch-type IC of a radio communication manner, connected to the loop antenna, for writing or deleting an amount of filled money according to an amount calculation information provided from the card reader; and
an amount filling controller, equipped in equipped within a predetermined place of the portable phone set, for recording an information of a new amount of filled money;
wherein, the non touch-type IC renews and records a current amount information by subtracting an used amount from the amount of filled money while communicating to the card reader through the loop antenna; and the amount filling controller downloads a new amount information by communicating with a sever of a financial institution and adds and records an new amount of money of the new amount information as much as a filled amount on the amount of money which is previously filled.

2. The portable phone set of claim 1, wherein the loop antenna and the non touch-type IC are equipped within a flip of the portable phone set.

3. A portable phone set installing an Integrated Circuit (IC) of non touch-type, the portable phone set comprising:
a loop antenna, equipped in a predetermined place of the portable phone set, for communicating with a card reader so that the portable phone set approaches to the card reader; and
a non touch-type IC, connected to the loop antenna, for forwarding an identifier information which is previously given to the card reader according to a request of the card reader;
wherein, the card reader detects the identifier information forwarded from the non touch-type IC whiling communicating the non touch-type IC, and transfers an amount information which will be calculated with the detected identifier information to a sever of a financial institution or a recording medium.

4. The portable phone set of claim 3, wherein the loop antenna and the non touch-type IC are equipped within a flip of the portable phone set.

5. The portable phone set of claim 3, further comprising at least an originating switch equipped in a place where a user can operate, the non touch-type IC modulates and outputs the identifier information into Radio Frequency (RF) by driving a driving power source provided from a battery of the portable phone set in accordance with inputting a signal of the originating switch.

6. The portable phone set of claim 5, wherein the non touch-type IC comprising:
a RF conversion section for modulating the identifier information into the RF signal;
an oscillation section for oscillating a frequency to communicate with the card reader;
a memory stored the identifier information; and
a controller for driving the oscillation section by inputting the driving power source which is provided from the battery according to sense the signal of the origination switch, detecting the identifier information stored in the memory and synthesizing the detected identifier information on the frequency generated in the oscillation, and modulating the synthesized signal by controlling the RF conversion section and transmitting the modulated signal through the loop antenna.

7. The portable phone set of claim 6, wherein the non touch-type IC further comprising an amplification section for amplifying a strength of a forwarding signal with a predetermined level, when the identifier information of the non touch-type IC is forwarded to the card reader by including with the frequency signal generated in the oscillation section.
